# EUROPÄISCHE PATENTSCHRIFT

(11) **EP 1 311 875 B1**
(45) Veröffentlichungstag und Bekanntmachung des Hinweises auf die Patenterteilung: **18.01.2006**
(21) Anmeldenummer: 01962921.1
(22) Anmeldetag: 08.08.2001
(51) Int. Cl.: G01V 1/38

(54) **STABILISATOR FÜR EINE UNTERWASSER-SCHLEPPANTENNE**
STABILISER FOR AN UNDERWATER TOWED ANTENNA
STABILISATEUR POUR ANTENNE PENDANTE SOUS-MARINE

(30) Priorität: 25.08.2000 DE 10041816
(43) Veröffentlichungstag der Anmeldung: 21.05.2003
(73) Patentinhaber: ATLAS ELEKTRONIK GMBH, 28305 Bremen (DE)
(72) Erfinder: LICHT, Joachim, 28201 Bremen (DE); HOFFMANN, Christoph, 27777 Ganderkesee (DE); SCHMIDT-SCHIERHORN, Helmut, 28259 Bremen (DE)
(86) Internationale Anmeldenummer: PCT/EP2001/009152
(87) Internationale Veröffentlichungsnummer: WO 2002/016967

(56) Entgegenhaltungen:
- GB-A- 1 362 865
- US-A- 2 945 469
- US-A- 3 375 800

## Beschreibung

### Technisches Gebiet

Die Erfindung betrifft einen Stabilisator für eine Unterwasser-Schleppantenne der im Anspruch 1 definierten Gattung.

### Stand der Technik

Bei Unterwasser-Schleppantennen mit einem oder mehreren akustisch sensitiven Schleppsträngen werden Stabilisatoren dieser Art eingesetzt, um u.a. vom Zugkabel herrührende Torsionsmomente an der Schleppantenne auszugleichen und ein Rollen der Schleppantenne zu verhindern. Ein bekannter, bei einer zweisträngigen Unterwasser-Schleppantenne verwendeter Stabilisator (DE 197 20 991 A1) weist einen zweiteiligen, hydrodynamisch optimierten Schleppkörper und zwei rotationssymmetrische Formkörper auf, die oberhalb und unterhalb des Schleppkörpers im Vertikalabstand zu diesem angeordnet und mit diesem über Tragstege verbunden sind. Die Achsen der Formkörper sind parallel zur Schleppkörperachse ausgerichtet, und die Tragstege verlaufen in einer durch die Achsen von Schlepp- und Formkörper hindurchgehenden Ebene.

Die Größe des stabilisierenden Moments eines solchen Stabilisators hängt von der Größe des Gewichts- und Auftriebsüberschusses der Formkörper sowie deren Hebelarm zur Rollachse ab. Große Momente können durch große Körper erzeugt werden. Das stabilisierende Moment ist dabei unabhängig von der Schleppgeschwindigkeit der Unterwasser-Schleppantenne. Dagegen wachsen die Störkräfte, die aufgrund der hydrodynamischen Anströmung des Stabilisators ein Torsions- oder Rollmoment auf den Stabilisator ausüben, quadratisch mit der Schleppgeschwindigkeit der Schleppantenne an. Um hohe Schleppgeschwindigkeiten der Schleppantenne zu ermöglichen, müssen daher für die Lagestabilisierung der Schleppantenne entsprechend große Formkörper mit hohem Gewichts- und Auftriebsüberschuss vorgesehen werden.

Ein bekanntes Minensuchgerät (Pengelley, R. "New MCM vehicles for Royal Navy". IN: International Defense Review 7/1988, S. 824) weist einen nachgeschleppten Schleppkörper auf, in dem für die Minendetektion geeignete Sonare und Sensoren integriert sind. Weiterhin verfügt der Schleppkörper über Sensoreinrichtungen, die seine Bewegung erfassen. Mit Hilfe eines Mikrocomputers werden aus den Messwerten der Sensoreinrichtung Steuersignale erzeugt, mit denen der Schleppkörper über im Mittelteil angeordnete Steuerruder stabilisiert wird.

Ein bekanntes Unterwassergerät für die Unterwasserkartographie (EP 0 050 077 A1) weist einen von einem Schiff geschleppten Schleppkörper auf, in dem ein Sonar für die Bodenvermessung installiert ist. Der Schleppkörper verfügt über einen Rollsensor, dessen Ausgangssignale zur Stabilisierung des Schleppkörpers und Verbesserung der Steuerfunktion des Schleppkörpers während der Schleppfahrt verwendet werden.

Eine bekannte Schleppvorrichtung für ein Fischnetz (US 2 945 469) weist ein zwischen Schleppseil und einem das Netz ziehenden Zugseil angeordnetes Steuergerät zur Einstellung der Schlepptiefe des Fischnetzes auf. Das Steuergerät hat eine Zugstange, an deren vorderem Ende das Schleppseil und an deren hinterem Ende das Zugseil zum Netz befestigt ist. Am vorderen Ende der Zugstange sind zwei von der Zugstange rechtwinklig abstehende, profilierte Ruderblätter angeordnet, die um rechtwinklig zur Zugstange ausgerichtete Schwenkachsen schwenkbar sind. Am rückwärtigen Ende eines jeden Ruderblatts ist ein Stabilisator integriert, der um eine in Längsrichtung der Ruderblätter, also parallel zur Schwenkachse der Ruderblätter, verlaufende Schwenkachse verschwenkt werden kann. Die Steuerung der beiden Stabilisatoren, die die Aufgabe haben, das Steuergerät gegen Rollen zu stabilisieren, also die Ruderblätter im wesentlichen in ihrer horizontalen Lage zu halten, erfolgt über eine mechanische Steuervorrichtung, die ein um eine in Richtung Rollachse des Steuergeräts ausgerichtete Pendelachse schwenkbares und unterhalb der Pendelachse im Wasser hängendes Pendelgewicht mit einer strömungsgünstigen Form aufweist. Der Pendelausschlag des Pendelgewichts wird über eine Gestänge in eine Schwenkbewegung der beiden Stabilisatoren um deren Schwenkachse umgesetzt.

### Darstellung der Erfindung

Der Erfindung liegt die Aufgabe zugrunde, einen Stabilisator der eingangs genannten Art zu entwerfen, der eine ausreichend gute Lagestabilisierung der Unterwasser-Schleppantenne auch bei hohen Schleppgeschwindigkeiten gewährleistet und beim Ausbringen und Einholen der Unterwasser-Schleppantenne leicht handhabbar ist.

Die Aufgabe ist erfindungsgemäß durch die Merkmale im Anspruch 1 gelöst.

Der erfindungsgemäße Stabilisator hat den Vorteil, dass er eine ausreichend gute Lagestabilität der Schleppstränge der Unterwasser-Schleppantenne auch bei hoher Schleppgeschwindigkeit bis beispielsweise 30 kn gewährleistet, darüber hinaus leichtgewichtig und kleinvolumig ohne sperrige Abmessungen ist und sich dadurch im Heckbereich des Schiffes beim Ausbringen und Einholen der Unterwasser-Schleppantenne selbst unter Seegangsbedingungen ohne mechanische Hilfsmittel gut händeln lässt. Diese Vorteile des erfindungsgemäßen Stabilisators werden dadurch bewirkt, dass durch das vom Rollwinkel abhängige Schwenken des flossenartigen Profilkörpers, der mit zunehmender Auslenkung eine zunehmende Auftriebskraft (Querkraft) erzeugt, am Schleppkörper ein mit der Schleppgeschwindigkeit anwachsendes stabilisierendes Moment erzeugt wird. Dadurch kann auf einen großvolumigen Schleppkörper zur Gewinnung eines Auftriebsüberschusses und auf ein großes Gewicht des Schleppkörpers zur Gewinnung eines Gewichtsüberschusses gegenüber den am Schleppkörper durch die hydrodynamische Umströmung angreifenden Störkräfte verzichtet werden. Die Realisierung der Steuervorrichtung mit Pendel und Pendelgewicht sowie einer den Pendelausschlag in einen Schwenkwinkel des Profilkörpers transformierenden Übertragungsvorrichtung ermöglicht eine konstruktiv einfache Ausbildung der Steuervorrichtung, die robust ist und geringe Herstellkosten erfordert. Die fluchtende Ausrichtung der Pendelachse mit der Rollachse ermöglicht dabei eine sehr einfache Auslegung der Übertragungsvorrichtung.

Zweckmäßige Ausführungsformen des erfindungsgemäßen Stabilisators mit vorteilhaften Weiterbildungen und Ausgestaltungen der Erfindung ergeben sich aus den weiteren Ansprüchen.

Gemäß einer bevorzugten Ausführungsform der Erfindung verläuft die Profilachse des Profilkörpers durch den Angriffspunkt der hydrodynamischen Kräfte im Profilkörper. Durch diese Anordnung der Profilachse arbeitet der Profilkörper nach dem Prinzip des balancierten Ruders, so daß mit relativ kleinen Kräften zum Schwenken des Profilkörpers große hydrodynamische Kräfte erzeugt werden. An der Drehachse selbst treten in dem zugelassenen Schwenkwinkelbereich des Profilkörpers keine rückdrehenden Momente durch die am Profilkörper angreifenden Strömungskräfte auf. Für den Profilkörper wird dabei vorzugsweise ein druckpunktstabiles Profil verwendet, wie es beispielsweise unter der Normbezeichnung NACA 0015 bekannt ist.

Zur Begrenzung des Schwenkwinkelbereichs des Rollkörpers wird gemäß einer vorteilhaften Ausführungsform der Erfindung der Pendelausschlag durch im Schleppkörper angeordnete Anschläge begrenzt, wobei bei der Verwendung eines Untersetzungsgetriebes in der Übertragungsvorrichtung der Pendelbereich des Pendelgewichtes unabhängig von dem zugelassenen Schwenkbereich des Profilkörpers festgelegt werden kann.

### Kurze Beschreibung der Zeichnung

Die Erfindung ist anhand eines in der Zeichnung dargestellten Ausführungsbeispiels im folgenden näher beschrieben. Es zeigen:
- Fig. 1: eine schematisch dargestellte Seitenansicht eines Stabilisators für eine zweisträngige Unterwasser-Schleppantenne,
- Fig. 2: einen Schnitt längs der Linie II - II in Fig. 1, schematisch dargestellt,
- Fig. 3: eine perspektivische Explosionsdarstellung des Schleppkörpers gemäß Fig. 1 und 2 in einer realen Ausführung.

### Wege zur Ausführung der Erfindung

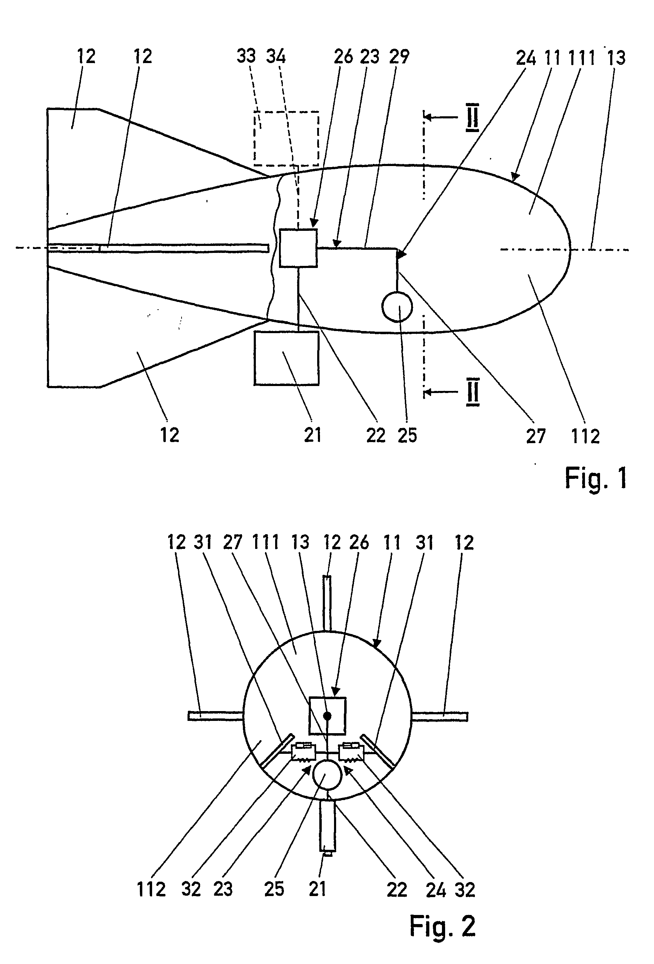

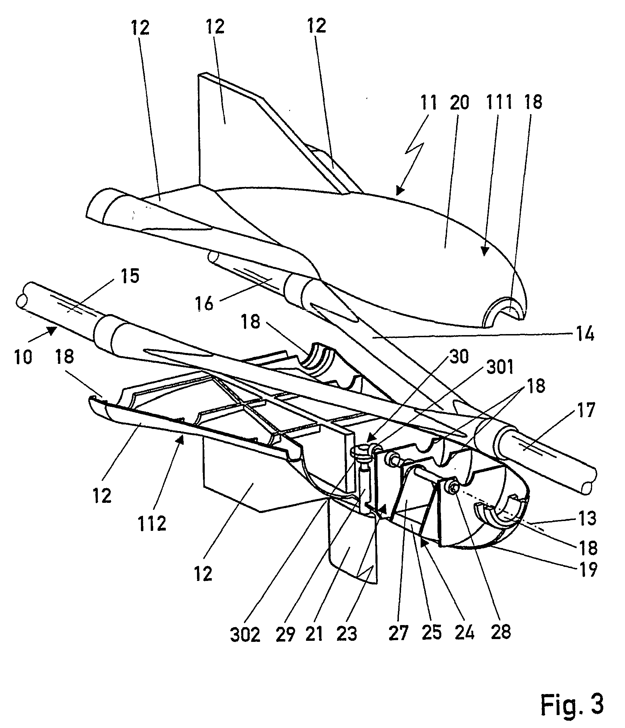

Der in Fig. 1 und 2 zur Erläuterung der Wirkungsweise nur schematisch und in Fig. 3 in einer realen Ausführung dargestellte Stabilisator für eine Unterwasser-Schleppantenne weist einen strömungsgüstig ausgelegten Schleppkörper 11 mit vier im Heckbereich abstehenden Stabilisatorflossen 12 auf, die gegeneinander jeweils um 90° versetzt angeordnet sind. Der Schleppkörper 11 ist im Bereich seiner Längs- oder Rollachse 13 mit der Schleppantenne fest verbunden. Die Verbindung erfolgt dabei in der Weise, daß der Schleppkörper zweiteilig ausgebildet ist (Fig. 3) und mit einem oberen Teile 111 und einem unteren Teil 112 auf eine Y-förmige Gabel 14 der Schleppantenne 10 aufsteckbar ist. Der obere und untere Teil 111, 112 sind miteinander verbindbar, wobei sie vorzugsweise längs ihrer Trennebene miteinander verrastet werden. Die in Fig. 3 nur ausschnittweise dargestellte Schleppantenne 10, die in der DE 197 20 991 A1 im Detail beschrieben und illustriert ist, weist zwei parallel verlaufende, akustisch sensitive Schleppstränge 15, 16, auch Hydrofonstreamer, genannt, auf, die an ihrem vorderen Ende mit je einem Anschlußende der Gabel 14 verbunden sind. In den dritten Gabelanschluß ist ein Zugkabel 17 eingeführt, das mechanisch und elektrisch mit den beiden Schleppsträngen 15, 16 verbunden ist. Zur Verbindung des Schleppkörpers 11 mit der Gabel 14 sind in dem oberen Teil 111 und dem unteren Teil 112 des Schleppkörpers 11 kongruente Aussparungen 18 vorgesehen, die bei aufeinandergesetzten Teilen 111, 112 die Gabel 14 vollständig aufnehmen und damit eine Durchführung für die Schleppantenne 10 bilden.

In der realen Ausführung des Stabilisators (Fig. 3) ist der untere Teil 112 des Schleppkörpers 11 als Schale 19 aus Kunststoff , die mit hier nicht dargestellten Öffnungen zum Wasseraustausch (Fluten, Lenzen) versehen ist, und der obere Teil 111 als Deckel aus einem Kunststoffmaterial mit geringem spezifischen Gewicht zusammengesetzt, so daß der obere Teil 111 einen möglichst großen Auftrieb besitzt. Alternativ kann der obere Teil 111 ebenfalls als Schale ausgeführt werden, wobei der vorhandene Hohlraum mit porösem Schaumstoff ausgefüllt wird. Durch die wasserdurchlässige Ausbildung der Schale 19 ist der untere Teil 112 des Schleppkörpers 11 wassergefüllt und erhält dadurch eine zusätzliche Vergrößerung seines Gewichtes, was sich vorteilhaft auf die Stabilisierungsfähigkeit des Stabilisators auswirkt.

Um den Stabilisator ein recht großes stabilisierendes Moment zu verleihen, das große Schleppgeschwindigkeiten von beispielsweise bis zu 30 kn zuläßt, ist an der Unterseite des Schleppkörpers 11 ein flossenartiger Profilkörper 21 im Abstand zur Rollachse 13 angeordnet, der um seine Profilachse 22 schwenkbar ausgebildet ist. Eine im Schleppkörper 11 integrierte Steuervorrichtung 23 schwenkt den Profilkörper 21 in Abhängigkeit von einem Rollwinkel des Schleppkörpers 11 um seine Profilachse 22, wobei die Verstellung des Profilkörpers 21 so erfolgt, daß am Schleppkörper 11 ein den momentanen Rollwinkel kompensierendes, rückdrehendes Rollmoment entsteht. Die Profilachse 22 verläuft dabei durch den Angriffspunkt der hydrodynamischen Kräfte am Profilkörper 21. Der Profilkörper 21 weist ein druckpunktstabiles, hier symmetrisches Profil auf, das im Ausführungsbeispiel tragflügelartig mit über die Profilachse 22 konstantem Querschnittsprofil ausgebildet ist. Als Profil ist beispielsweise das NACA 0015 ausgewählt. Die Profilachse 22 ist im Ausführungsbeispiel vertikal ausgerichtet, kann aber auch unter einem Winkel zur Vertikalen verlaufen.

In dem hier beschriebenen Ausführungsbeispiel ist zur technisch einfachen und fertigungskostengünstigen Ausführung der Steuervorrichtung 23 ein Pendel 24 mit einer parallel zu der Rollachse 13 ausgerichteten, vorzugsweise in oder wenig unterhalb der Rollachse 13 liegenden Pendelachse und einem mit Radialabstand unter der Pendelachse liegenden Pendelgewicht 25 sowie eine Übertragungsvorrichtung 26 vorgesehen, die den Pendelausschlag in einen Schwenkwinkel des Profilkörpers 11 transformiert. Das Pendelgewicht 25 ist über eine steifen Pendelarm 27 an einer mit der Pendelachse koaxialen Pendelwelle 28 festgelegt, die - wie Fig. 3 zeigt - im unteren Teil 112 des Schleppkörpers 11 drehbar gelagert ist. Der Profilkörper 21 ist drehfest auf einer mit der Profilachse 22 koaxialen Drehwelle 29 befestigt, und ein die Übertragungsvorrichtung 26 bildendes Untersetzungsgetriebe 30 bringt die Drehwelle 29 mit der Pendelwelle 28 in Eingriff und setzt den Ausschlag des Pendelgewichtes 25 in einem festen Verhältnis, z.B. 3:1, in einen Schwenkwinkel der Drehwelle 29 um. Vorzugsweise ist das Untersetzungsgetriebe 30 so ausgeführt, daß ein maximaler Pendelausschlag von beispielsweise 30° einen maximalen Schwenkwinkel der Drehwelle 29 um 10° bewirkt. Im dargestellten Ausführungsbeispiel ist das Untersetzungsgetriebe 30 als Kegelradgetriebe mit zwei miteinander kämmenden Kegelrädern 301, 302 ausgeführt, deren Achsen rechtwinklig zueinander ausgerichtet sind. Das eine Kegelrad 301 ist mit der Pendelwelle 28 und das andere Kegelrad 302 mit der Drehwelle 29 drehfest verbunden. Zur Begrenzung des Pendelausschlags sind im Schleppkörper 11 Anschläge 31 angeordnet. Die Eigenschwingung des Pendels 24 wird über Feder-Dämpfer-Elemente 32 beeinflußt, die auf voneinander abgekehrten Seiten des Pendelarms 27 angreifen. Eine zusätzliche Dämpfung des Pendels 24 erfolgt dadurch, daß das Pendelgewicht 25 im wassergefüllten unteren Teil 112 des Schleppkörpers 11 schwenkt und dabei eine bestimmte Wassermenge verdrängen muß.

Im Schleppbetrieb des Stabilisators wird ein Pendelausschlag in eine Drehung der Drehwelle 29 umgesetzt, wodurch der Profilkörper 21 um seine Profilachse 22 geschwenkt wird. Aufgrund der Umströmung des Profilkörpers 21 entsteht eine quer zur Profilachse am Profilkörper 21 angreifende Auftriebskraft und daraus resultierend ein Rollmoment auf den Schleppkörper 11, das den Schleppkörper 11 wieder zurückdreht und damit stabilisiert. Durch den Verlauf der Profilachse 22 durch den Angriffspunkt der hydrodynamischen Kräfte ist sichergestellt, daß keine wesentlichen Drehmomente auf die Drehwelle 29 zurückwirken, so daß mit relativ kleinen Pendelkräften relativ große hydrodynamische Kräfte erzeugt werden.

In einer weiteren Ausführungsform des Stabilisators kann ein zweiter, gleichgestalteter Profilkörper 33 auf der Oberseite des Schleppkörpers 11 vorgesehen werden, wie dies in Fig. 1 strichliniert angedeutet ist. Der mit dem Profilkörper 22 identische Profilkörper 33 ist wiederum um eine vertikale Profilachse 34 schwenkbar, die mit der Profilachse 22 des Profilkörpers 21 fluchtet, und wird von der Steuervorrichtung 23 bei Auftreten von Rollwinkeln im Schleppkörper 11 um gleiche Schwenkwinkel verstellt wie der untere Profilkörper 21. Allerdings erfolgt die Verstellung des oberen Profilkörpers 33 gegensinnig zum unteren Profilkörper 21.

Die Erfindung ist nicht auf das beschriebene Ausführungsbeispiel beschränkt. So kann die Profilachse 22 des Profilkörpers 21 auch horizontal ausgerichtet oder in einer zur Rollachse 13 rechtwinkligen Ebene um jeden Drehwinkel um die Rollachse 13 gedreht sein. Es ist auch möglich, die Profilachse 22 zusätzlich um kleine Winkel in Richtung Rollachse 13 nach vorn und hinten geschwenkt anzuordnen.

## Patentansprüche

1. Stabilisator für eine Unterwasser Schleppantenne (10) mit einem strömungsgünstig ausgelegten Schleppkörper (11), der eine durch den Verbindungspunkt mit der Schleppantenne (10) verlaufende Rollachse (13) aufweist, und mit mindestens einem außen am Schleppkörper (11) im Radialabstand zur Rollachse (13) angeordneten Formkörper, wobei der Formkörper ein flossenartiger Profilkörper (21) mit einem längs seiner Profilachse (22) konstanten Querschnittsprofil ist, der um seine Profilachse (22) schwenkbar ist, wobei ferner im Innern des Schleppkörpers (11) eine Steuervorrichtung (23) integriert ist, die den Profilkörper (21) um vom Rollwinkel des Schleppkörpers (11) abhängige Schwenkwinkel so verstellt, daß die dadurch am Profilkörper (21) hervorgerufene Auftriebskraft am Schieppkörper (11) ein diesen rückdrehendes Rollmoment erzeugt, und Steuervorrichtung (23) ein im Innern des Schleppkörpers (11) angeordnetes Pendel (24) mit einer parallel zur Rollachse (13) ausgerichteten, vorzugsweise mit der Rollachse (13) fluchtenden, Pendelachse und einem mit Radialabstand unter der Pendelachse liegenden Pendelgewicht (25) sowie eine den Pendelauschlag in einen Schwenkwinkel des Profilkörpers (21) transformierende Übertragungsvorrichtung (26) aufweist.

2. Stabilisator nach Anspruch 1, **dadurch gekennzeichnet, daß** die Profilachse (22) durch den Angriffspunkt der hydrodynamischen Kräfte am Profilkörper (21) verläuft.

3. Stabilisator nach Anspruch 1 oder 2, **dadurch gekennzeichnet, daß** die Profilachse (22) unter einem beliebigen Winkel radial zur Rollachse (13) verläuft, vorzugsweise vertikal oder horizontal ausgerichtet ist

4. Stabilisator nach einem der Ansprüche 1-3. **dadurch gekennzeichnet, daß** der Profilkörper (21) ein druckpunktstabiles Profil, z.B. NACA 0015, besitzt.

5. Stabilisator nach einem der Ansprüche 1 - 4, **dadurch gekennzeichnet, daß** der Schwenkbereich des Profilkörpers (21) begrenzt ist und vorzugsweise zwischen -10° und +10° liegt.

6. Stabilisator nach einem der Ansprüche 1 - 5, **dadurch gekennzeichnet, daß** das Pedelgewicht (25) über einen steifen Pendelarm (27) an einer mit der Pendelachse koaxialen, im Schleppkörper (11) drehbar gelagerten Pendelwelle (28) festgelegt ist, daß der Profilkörper (21) auf einer mit der Profilachse (22) koaxialen, im Schleppkörper (11) drehbar gelagerten Drehwelle (29) drehfest sitzt und daß die Übertragungsvorrichtung (26) als ein die Pendelwelle (28) und die Drehwelle (29) verbindendes Getriebe (30) ausgebildet ist.

7. Stabilisator nach Anspruch 6, **dadurch gekennzeichnet, daß** das Getriebe ein Untersetzungsgetriebe ist, das den Pendelausschlag in einem festen Verhältnis, z.B. 3:1, in einen Schwenkwinkel der Drehwelle (29) umsetzt.

8. Stabilisator nach Anspruch 7, **dadurch gekennzeichnet, daß** das Untersetzungsgetriebe ein Kegelradgetriebe mit zwei miteinander kämmenden Kegelrädern (301, 302) ist, deren Radachsen rechtwinklig zueinander ausgerichtet sind, und daß jeweils ein Kegelrad (301, 302) mit der Pendelwelle (28) und der Drehwelle (29) starr verbunden ist.

9. Stabilisator nach einem der Ansprüche 1 - 8, **dadurch gekennzeichnet, daß** im Schleppkörper (11) Anschläge (31) zur Begrenzung des Pendelausschlags angeordnet sind.

10. Stabilisator nach einem der Ansprüche 1 - 9, **dadurch gekennzeichnet, daß** auf voneinander abgekehrten Seiten des Pendelarms (27) jeweils ein Feder-Dämpfer-Element (32) angreift.

11. Stabilisator nach einem der Ansprüche 1 - 10, **dadurch gekennzeichnet, daß** der Schleppkörper (11) in seinem bis zur Rollachse (13) reichenden unteren Teil (112) wassergefüllt ist.

12. Stabilisator nach einem der Ansprüche 1 -11, **dadurch gekennzeichnet, daß** der bis zur Rollachse (13) reichende obere Teil (111) des Schleppkörpers (11) mit einem auftrieberzeugenden Material, vorzugsweise Schaumstoff, gefüllt ist oder aus einem solchen Material besteht.

13. Stabilisator nach Anspruch 11 und 12, **dadurch gekennzeichnet, daß** der Schleppkörper (11) zweigeteilt ist und der untere Teil (112) als wasserdurchlässige Schale (19) aus Kunststoff und der obere Teil (111) als die Schale (19) verschließender Deckel (20) aus einem Kunststoffmaterial mit geringem spezifischen Gewicht ausgeführt ist.

14. Stabilisator nach Anspruch 13, **dadurch gekennzeichnet, daß** in der Schale (19) und im Deckel (20) miteinander kongruente Aussparungen (18) vorgesehen sind, die bei zusammengesetztem Schleppkörper (11) eine Durchführung für die Schleppantenne (10) bilden.

15. Stabilisator nach einem der Ansprüche 1 - 14, **dadurch gekennzeichnet, daß** ein zweiter, gleichgestalteter, flossenartiger Profilkörper (33) um seine mit der Profilachse (22) des ersten Profilkörpers (21) fluchtende Profilachse (34) schwenkbar in gleicher Weise am Schleppkörper (11) angeordnet und von der Steuervorrichtung (23) um gleiche Schwenkwinkel mit zum ersten Profilkörper (21) gegensinniger Schwenkrichtung verstellbar ist.

## Claims

1. Stabilizer for an underwater towed antenna (10) having a streamlined towed body (11) which has a roll axis (13) running through the connection point to the towed antenna (10) and having at least one moulding, which is arranged externally on the towed body (11) at a radial distance from the roll axis (13), with the moulding being a fin-like profiled body (21) with a cross-sectional profile which is constant along its profile axis (22), which can pivot about its profile axis (22) in which, furthermore, a control apparatus (23) is integrated in the interior of the towed body (11) and moves the profiled body (21) through a pivoting angle which is dependent on the roll angle of the towed body (11), such that the lift force which is produced in this way on the profiled body (21) produces a roll moment on the towed body (11) which rotates it back, and the control apparatus (23) has a pendulum (24), which is arranged in the interior of the towed body (11), having a pendulum axis which is aligned parallel to the roll axis (13) and is preferably flush with the roll axis (13), and having a pendulum weight (25), which is located at a radial distance under the pendulum axis, and has a transmission apparatus (26) which transforms the pendulum deflection into a pivoting angle of the profiled body (21).

2. Stabilizer according to Claim 1, **characterized in that** the profile axis (22) runs through the point at which the hydraulic forces act on the profiled body (21).

3. Stabilizer according to Claim 1 or 2, **characterized in that** the profile axis (22) runs at any desired angle radially with respect to the roll axis (13), and is preferably aligned vertically or horizontally.

4. Stabilizer according to one of Claims 1-3, **characterized in that** the profiled body (21) has a pressure-point-stable profile, for example NACA 0015.

5. Stabilizer according to one of Claims 1-4, **characterized in that** the pivoting range of the profiled body (21) is limited and is preferably between -10° and +10°.

6. Stabilizer according to one of Claims 1-5, **characterized in that** the pendulum weight (25) is fixed via a stiff pendulum arm (27) on a pendulum shaft (28) which is coaxial with the pendulum axis and is mounted in the towed body (11) such that it can rotate, **in that** the profiled body (21) is seated in a rotationally fixed manner on a rotating shaft (29) which is coaxial with the profile axis (22) and is mounted in the towed body (11) such that it can rotate, and **in that** the transmission apparatus (26) is in the form of a gearbox (30) which connects the pendulum shaft (28) and the rotating shaft (29).

7. Stabilizer according to Claim 6, **characterized in that** the gearbox is a step-down gearbox which converts the pendulum deflection into a pivoting angle of the rotation shaft (29) in a fixed ratio, for example 3:1.

8. Stabilizer according to Claim 7, **characterized in that** the step-down gearbox is a bevel-gear gearbox with two bevel gears (301, 302) which engage with one another and whose gear axes are aligned at right angles to one another, and **in that** one bevel gear (301, 302) is respectively connected to the pendulum shaft (28) and to the rotation shaft (29).

9. Stabilizer according to one of Claims 1-8, **characterized in that** stops (31) are arranged in the towed body (11) in order to limit the pendulum deflection.

10. Stabilizer according to one of Claims 1-9, **characterized in that** a spring/damper element (32) acts on each of the faces of the pendulum arm (27) which face away from one another.

11. Stabilizer according to one of Claims 1-10, **characterized in that** the lower part (112) of the towed body (11), which extends as far as the roll axis (13), is filled with water.

12. Stabilizer according to one of Claims 1-11, **characterized in that** the upper part (111) of the towed body (11), which extends as far as the roll axis (13), is filled with a material which produces lift, preferably foam, or is composed of a material such as this.

13. Stabilizer according to Claims 11 and 12, **characterized in that** the towed body (11) is in two parts, the lower part (112) is in the form of a water-permeable shell (19) composed of plastic, and the upper part (111) is in the form of a cover (20) which closes the shell (19) and is composed of a plastic material with a low relative density.

14. Stabilizer according to Claim 13, **characterized in that** cutouts (18) which are congruent to one another are provided in the shell (19) and in the cover (20), and form a bushing for the towed antenna (10) when the towed body (11) has been assembled.

15. Stabilizer according to one of Claims 1-14, **characterized in that** a second fin-like profiled body (33) of the same shape is arranged in the same way on the towed body (11) such that it can pivot about its profile axis (34), which is aligned with the profile axis (22) of the first profiled body (21), and can be moved by the control apparatus (23) through the same pivoting angle, but in the opposite pivoting direction to the first profiled body (21).

## Revendications

1. Stabilisateur pour une antenne pendante sous-marine (10) comportant un corps remorqué (11) dimensionné favorablement sur le plan hydrodynamique et qui présente un axe de roulis (13) passant par le point de liaison avec l'antenne pendante (10), et comportant au moins un corps façonné disposé à l'extérieur sur le corps remorqué (11) à une distance radiale de l'axe de roulis (13), le corps façonné étant un corps profilé de type aileron (21) pourvu d'un profil de section transversale constante le long de son axe de profil (22) et pouvant pivoter autour de son axe de profil (22), et un dispositif de commander(23) étant en outre intégré à l'intérieur du corps remorqué (11), dispositif qui déplace le corps profilé (21) d'un angle de pivotement dépendant de l'angle de roulis du corps remorqué (11) de façon à ce que la force de poussée provoquée par cela sur le corps profilé (21) produise sur le corps remorqué (11) un moment de roulis le faisant tourner en arrière, et le dispositif de commande (23) présentant un pendule (24) disposé à l'intérieur du corps remorqué (11) et comportant un axe de pendule orienté parallèlement à l'axe de roulis (13), de préférence aligné sur l'axe de roulis, et un poids pendulaire (25) se trouvant à une distance radiale au-dessous de l'axe pendulaire, ainsi qu'un dispositif de transmission (26) transformant la déviation du pendule en un angle de pivotement du corps profilé (21).

2. Stabilisateur selon la revendication 1, **caractérisé en ce que** l'axe de profil (22) passe par le point d'application des forces hydrodynamiques sur le corps profilé (21).

3. Stabilisateur selon la revendication 1 ou 2, **caractérisé en ce que** l'axe de profil (22) s'étend sous un angle quelconque radialement par rapport à l'axe de roulis (13), est orienté de préférence verticalement ou horizontalement.

4. Stabilisateur selon l'une quelconque des revendications 1-3, **caractérisé en ce que** le corps profilé (21) possède un profil stable quant au centre de pression, par exemple le profil NACA 0015.

5. Stabilisateur selon l'une quelconque des revendications 1-4, **caractérisé en ce que** la plage de pivotement du corps profilé (21) est limitée et se situe de préférence entre -10° et +10°.

6. Stabilisateur selon l'une quelconque des revendications 1-5, **caractérisé en ce que** le poids pendulaire (25) est fixé par l'intermédiaire d'un bras pendulaire (27) rigide à un arbre pendulaire (28) monté de façon à pouvoir tourner dans le corps remorqué (11) et coaxial avec l'axe pendulaire, **en ce que** le corps profilé (21) est logé solidairement en rotation sur un arbre de rotation (29) monté de façon à pouvoir tourner dans le corps remorqué (11) et coaxialement avec l'axe de profil (22), et **en ce que** le dispositif de transmission (26) est conformé en tant qu'engrenage (30) raccordant l'arbre pendulaire (28) et l'arbre de rotation (29).

7. Stabilisateur selon la revendication 6, **caractérisé en ce que** l'engrenage est un engrenage réducteur qui transforme la déviation du pendule dans un rapport fixe, par exemple de 3:1, en un angle de pivotement de l'arbre de rotation (29).

8. Stabilisateur selon la revendication 7, **caractérisé en ce que** l'engrenage réducteur est un engrenage à roues coniques comportant deux roues coniques (301,302) s'engrenant l'une avec l'autre dont les axes de roue sont orientés perpendiculairement l'un à l'autre, et **en ce qu'**une roue conique (301,302) est raccordée rigidement respectivement à l'arbre pendulaire (28) et à l'arbre de rotation (29).

9. Stabilisateur selon l'une quelconque des revendications 1-8, **caractérisé en ce que** des butées (31) sont disposées dans le corps remorqué (11) afin de limiter la déviation du pendule.

10. Stabilisateur selon l'une quelconque des revendications 1-9, **caractérisé en ce que** sur des côtés du bras pendulaire (27) opposés l'un par rapport à l'autre est appliqué à chaque fois un élément amortisseur à ressort (32).

11. Stabilisateur selon l'une quelconque des revendications 1-10, **caractérisé en ce que** le corps remorqué (11) est rempli d'eau dans sa partie inférieure (112) s'étendant jusqu'à l'axe de roulis (13).

12. Stabilisateur selon l'une quelconque des revendications 1-11, **caractérisé en ce que** la partie supérieure (111) du corps remorqué (11) s'étendant jusqu'à l'axe de roulis (13) est remplie d'un matériau produisant une poussée, de préférence de mousse, ou est constituée d'un tel matériau.

13. Stabilisateur selon les revendications 11 et 12, **caractérisé en ce que** le corps remorqué (11) est en deux parties et la partie inférieure (112) est réalisée en tant que coque perméable à l'eau (19) en matière synthétique et la partie supérieure (111) est réalisée en tant que couvercle (20) fermant la coque (19) en une matière synthétique présentant un faible poids spécifique.

14. Stabilisateur selon la revendication 13, **caractérisé en ce que** des évidements (18) congruents les uns aux autres sont prévus dans la coque (19) et dans le couvercle (20), lesdits évidements forment, lorsque le corps remorqué (11) est assemblé, un passage pour l'antenne pendante (10).

15. Stabilisateur selon l'une quelconque des revendications 1-14, **caractérisé en ce qu'**un second corps profilé de type aileron de même conception (33) est disposé de la même façon sur le corps remorqué (11) de sorte à pouvoir pivoter autour son axe de profil (34) aligné sur l'axe de profil (22) du premier corps profilé (21), et peut être déplacé par le dispositif de commande (23) d'un même angle de pivotement dans le sens de pivotement contraire au premier corps profilé (21).
